Europäisches Patentamt

European Patent Office

Office européen des brevets

(19)

(11) **EP 0 776 995 B1**

(12) **EUROPÄISCHE PATENTSCHRIFT**

(45) Veröffentlichungstag und Bekanntmachung des Hinweises auf die Patenterteilung:
**08.09.1999 Patentblatt 1999/36**

(51) Int Cl.$^6$: **C25B 3/00**, B01D 61/44

(21) Anmeldenummer: **96115424.2**

(22) Anmeldetag: **26.09.1996**

(54) **Verfahren zur Herstellung von Alkoholaten**

Process for the preparation of alcoholates

Procédé de préparation d'alcoolates

(84) Benannte Vertragsstaaten:
**CH DE ES FI FR GB IT LI**

(30) Priorität: **29.11.1995 DE 19544496**

(43) Veröffentlichungstag der Anmeldung:
**04.06.1997 Patentblatt 1997/23**

(73) Patentinhaber: **HÜLS AKTIENGESELLSCHAFT**
**45764 Marl (DE)**

(72) Erfinder: **Sridhar, Srinivasan, Dr.**
**45770 Marl (DE)**

(56) Entgegenhaltungen:
**EP-A- 0 237 620        EP-A- 0 702 998**
**US-A- 5 425 856**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein neuartiges Verfahren zur Herstellung von Alkoholaten, das insbesondere zur Herstellung von Sonderalkoholaten verwendet werden kann. Als Sonderalkoholate werden hier im folgenden in der Hauptsache gemeinhin auch in geringer Menge nicht auf dem Markt erhältliche Alkoholate wie z. B. die Alkoholate höherer oder mehrwertiger Alkohole bezeichnet.

Zu den klassischen Verfahren der Herstellung von Alkoholaten gehört die Chloralkali-Elektrolyse nach dem Amalgam-Verfahren, bei der Natriumamalgam mit Alkohol umgesetzt wird [vgl. z. B. Chemical and Engineering News 22, 1903-06 (1944)]. Der Einsatz von Quecksilber ist jedoch aus den heutigen ökologischen Gesichtspunkten heraus unerwünscht. Eine weitere bekannte Methode ist die Herstellung von Alkoholaten aus einem Alkalimetall und einem Alkohol bzw. aus einem Alkalihydroxid und einem Alkohol. Die Alkoholatproduktion aus einem Alkalimetall und einem tertiären Alkohol ist z. B. aus DE-23 33 634 (Dynamit Nobel) oder DE-26 12 642 (Degussa) bekannt. Die Herstellung eines Alkoholats aus einem Alkalihydroxid und einem tertiären Alkohol ist ebenfalls bekannt. Die erste Verfahrensvariante erfordert den Einsatz von teurem Alkalimetall, und bei der zweiten Variante ausgehend vom Alkalihydroxid muß das bei der Umsetzung entstehende Wasser destillativ entfernt werden, was den entsprechenden hohen thermischen Aufwand erfordert.

In DE-A-33 46 131 werden Alkalialkoholate elektrolytisch aus Salzen hergestellt, wobei eine Elektrolysezelle, bei der eine Kationenaustauschmembran die Elektrodenräume trennt, eingesetzt wird. In DE-42 33 191.9-43 wird ein Verfahren beschrieben, daß die Herstellung eines Alkalialkoholats aus einem Salz durch Elektrodialyse ermöglicht.

Verfahren zur Herstellung von Sonderalkoholaten sind nur in Einzelfällen beschrieben. Die herzustellenden Mengen solcher Alkoholate sind in der Regel, im Vergleich zu gängigen Alkoholaten wie Natriummethylat bzw. -ethylat, recht klein. Um marktgerecht reagieren zu können, ist es sinnvoll, je nach der Marktbedürfnis, ein Alkoholat (Überproduktion) in ein anderes (Knappheit) umzuwandeln und auf diese Weise die Produktion verschiedener Stoffe zu steuern.

Alkoholate höherer und/oder mehrwertiger Alkohole lassen sich bekanntlich grundsätzlich durch Umalkoholisieren, d. h. durch Umsetzen niederer Alkoholate ROM mit höheren Alkoholen R'OH (wobei R und R' Alkylreste unterschiedlicher Kohlenstoffkettenlänge sind und M ein Metallkation bezeichnet) in einem flüssigen Reaktionsgemisch bei geeigneten Temperatur - und Druckverhältnissen herstellen. Diese Umsetzung wird auch als "Umkochen" bezeichnet. Die Lage des Gleichgewichts

$$ROM + R'OH \Leftrightarrow ROH + R'OM \qquad (1)$$

hängt von der Acidität der beiden Alkohole ab, die in der Reihenfolge Methanol > primäre > sekundäre > tertiäre Alkohole abnimmt [R. T. McIver und J. A. Scott, J. American Chemical Soc. 96 (1973) 2706]. Daher soll die Herstellung der Alkoholate sekundärer Alkohole auf diesem Wege nur in Ausnahmefällen möglich sein und die Herstellung der Alkoholate tertiärer Alkohole durch Umalkoholisierung sogar überhaupt nicht gelingen ["Methoden der Organischen Chemie" (1963) Bd. 6/2, S. 13]. Jedoch wurde die Herstellung von Alkoholaten durch Umkochen in DE-1 254 612 und in DE-27 26 491 (beide von Dynamit Nobel) auch für höhere Alkohole beschrieben. GB-1 143 897 (Metallgesellschaft) beschreibt die Umsetzung eines einwertigen Alkalialkoholats mit einem bis zu sechs Hydroxylgruppen enthaltenden $C_2$- bis $C_{18}$-Alkohol oder -Phenol, wobei als Lösungsmittel ein Überschuß an einwertigem Alkohol und/oder ein Kohlenwasserstoff eingesetzt wird.

Das Umkochen führt aber immer zur Bildung des leichtsiedenden Alkohols ROH (z. B. Methanol), der zur Isolierung des gewünschten Alkoholats - ggf. zusätzlich zum nicht umgesetzten höheren Alkohol R'OH - aus dem Reaktionsproduktgemisch abgetrennt werden muß. Die Abtrennung des niederen Alkohols ROH erfordert einen hohen thermischen Aufwand. Insbesondere wenn man von einem Methylat ausgeht, kommt dem Aufwand eine besondere Bedeutung zu, da bekanntlich Methanol unter den organischen Verbindungen eine besonders hohe Verdampfungsenthalpie aufweist und der Verdampfungsaufwand entsprechend besonders hoch ist. Während der größte Teil des Alkohols destillativ entfernt werden kann, verbleibt ein Rest im Produkt. Man kann diesen Rest nur unvollständig und mit hohem Aufwand durch weitere Maßnahmen, wie etwa durch den Einsatz eines Schleppmittels, verringern.

Aufgabe der vorliegenden Erfindung war es daher, ein alternatives Verfahren zur Herstellung von Alkoholaten ausgehend von einem Alkoholat zu finden, das für ein breites Spektrum von Alkoholen zugänglich ist und das ferner - anders als das Umkochen - ohne den erheblichen thermischen Aufwand bei der Aufarbeitung des Produktes auskommt und damit wirtschaftlicher ist. Als erschwerend galt die herrschende Meinung, daß eine solche Umalkoholisierung in flüssiger Phase nur durch Umkochen gelingen kann.

Die Aufgabe wird erfindungsgemäß dadurch gelöst, daß unter dem Einfluß eines elektrischen Feldes ein Alkohol durch Einfuhr von Metallionen in das entsprechende Alkoholat umgesetzt wird und daß ein anderes Alkoholat gleichzeitig als Quelle für die Metallionen dient, indem es in dem elektrischen Feld zerlegt wird. Da die Umsetzung und die Zerlegung hierbei in räumlich durch Ionenaustauschmembranen voneinander getrennten Räumen erfolgen, kann die Methode vollständig auf den thermischen Aufwand zur Abtrennung des frei werdenden leichter siedenden Alkohols ROH verzichten.

Gegenstand der Erfindung ist also die Umsetzung eines Alkoholats ROM in ein anderes Alkoholat R'OM im elektrischen Feld. Das Ausgangsalkoholat ROM, beispielsweise ein Methylat, dient dabei als Quelle für das Metallion, das zur Umsetzung des vorgelegten Alkohols in das Alkoholat benötigt wird. Als Ausgangsstoffe dienen bevorzugt ein Alkohol und das Alkoholat eines anderen Alkohols mit kleinerem Alkylrest als der des ebenfalls vorgelegten Alkohols.

Das erfindungsgemäße Verfahren kann elektrolytisch oder elektrodialytisch ausgeführt werden.

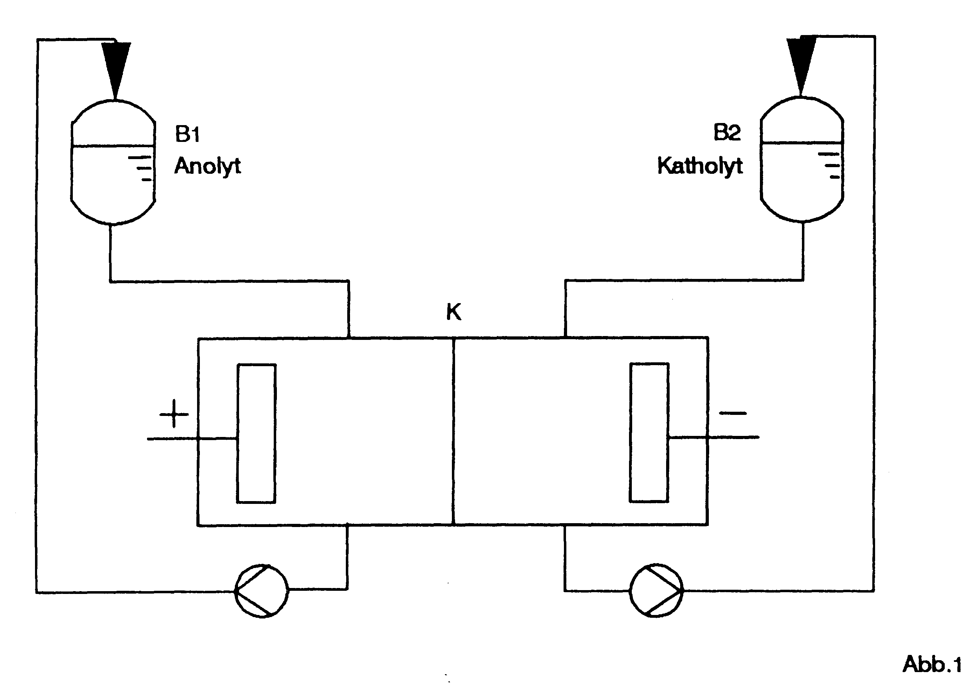

Bei der elektrolytischen Methode (vgl. Abb. 1) wird das Metallion aus der Anodenkammer durch eine Kationenaustauschmembran K in Richtung der Kathode (in Abb. 1 mit - gekennzeichnet) abgeführt. Die an der Anode (in Abb. 1 mit + gekennzeichnet) frei werdenden Alkoholationen werden z. B. protoniert oder können direkt zum Zwecke der Methoxylierung verwendet werden; so könnten gleich an der Anode Ether wie Furan [N. Elming u. N. Clausen-Kaas, Acta Chem. Scand. 6 (1952) 53] und Tetrahydrofuran [N. L. Weinberg et al., Chem. Rev. 68 (1968) 449], Amine wie Benzylamin [N. L. Weinberg, J. Org. Chem. 33 (1968) 4325 und J. E. Barry et al., J. Org. Chem. 39 (1974) 2695] oder Amide wie Pyrrol, Piperidin und Morpholin [T. Shono, Tetrahedron 40 (1984) 611] zu wertvollen Derivaten methoxyliert werden. In der Kathodenkammer erfolgt die Umsetzung des vorgelegten Alkohols in Anwesenheit der Metallionen in das gewünschte Alkoholat. Es entsteht neben Wasserstoff ein Produktgemisch aus vorgelegtem Alkohol und entsprechendem Alkoholat, aus dem das Alkoholat isoliert werden kann. Insbesondere bei der Herstellung von Sonderalkoholaten entfällt damit anders als beim herkömmlichen Umkochen der hohe (z. B. destillative) Trennaufwand, da der leichtsiedende Alkohol des Ausgangsalkoholats nicht im Produktgemisch enthalten ist.

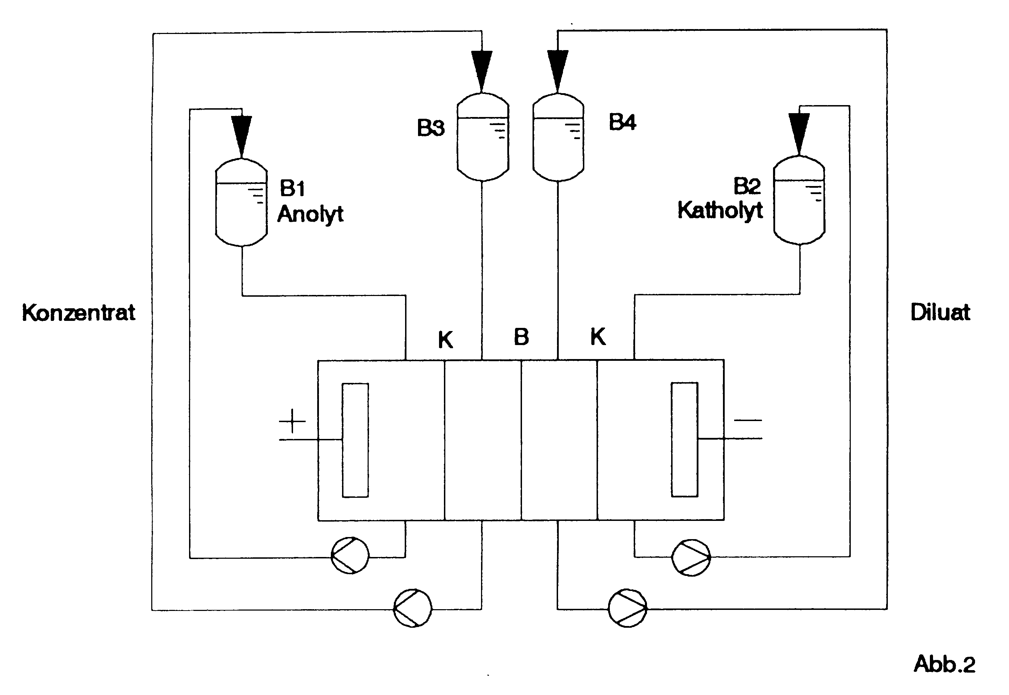

In einer besonderen Ausführung des erfindungsgemäßen Verfahrens kann man auch elektrodialytisch nach der Gleichung (1) vorgehen, wobei das Ausgangsalkoholat-Anion überwiegend (in den intermediären Kammern) wieder in den Alkohol ROH zurückgeführt wird. Abbildung 2 zeigt exemplarisch den Aufbau einer geeigneten Elektrodialysevorrichtung zur Durchführung des erfindungsgemäßen Verfahrens. Dargestellt ist hier eine elektrodialytische Zelle mit vier Kammern. Die Anode ist mit + und die Kathode mit - gekennzeichnet. Die Kammern der elektrolytischen Zelle sind abwechselnd jeweils durch eine Kationenaustauschmembran K oder eine bipolare Membran B begrenzt. Anstelle der bipolaren Membran kann auch ein Membranpaar, bestehend aus einer Anionen- und einer Kationenaustauschmembran, verwendet werden. Die Anodenkammer sowie die übernächste Kammer werden über die Behälter B1 und B4 mit dem Ausgangsalkoholat beschickt, die beiden übrigen Kammern werden über die Behälter B2 und B3 mit dem umzusetzenden Alkohol versorgt. Bei Anlegen eines Stromes wird das Ausgangsalkoholat in der Anodenkammer und der übernächsten Kammer zerlegt. Die Metallkationen wandern Richtung Kathode durch die Kationenaustauschmembranen in die jeweils benachbarten Kammern, wo durch Umsetzen des vorgelegten Alkohols das gewünschte Alkoholat entsteht. Die dabei freigesetzten Protonen wandern zum einen durch die bipolare Membran B in Richtung der Kathode in die benachbarte intermediäre Kammer, wo aus dem Ausgangsalkoholat-Anion der entsprechende Alkohol entsteht. Zum anderen entsteht an der Kathode Wasserstoff. Die in der Anodenkammer vorhandenen Alkoholationen können wie bei der elektrolytischen Verfahrensweise protoniert oder z. B. zur Methoxylierung verwendet werden. Die Elektrodialyse wird vorzugsweise in einer elektrodialytischen Zelle mit 2 n + 2 Kammern, wobei n eine ganze Zahl von 1 bis 50 ist, durchgeführt. Dem Fachmann erschließen sich daraus weitere Ausführungsformen.

Das erfindungsgemäße Verfahren und seine Ausführungsarten werden anhand der Beispiele näher erläutert, in denen auch die Abbildungen näher beschrieben werden.

Das erfindungsgemäße Verfahren wird vorzugsweise bei Umgebungsdruck und Temperaturen zwischen 0 °C bis 100 °C, besonders bevorzugt zwischen 20 °C und 50 °C, durchgeführt. Durch eine geeignete Kreislaufführung durch die Kammern - wie in den Abb. 1 und 2 angedeutet - und ein geeignetes Zu- und Abführen von Edukten und Produkten kann das Verfahren kontinuierlich oder ansatzweise (diskontinuierlich) betrieben werden.

Erfindungsgemäß lassen sich u. a. die Alkoholate aus einwertigen aliphatischen und cycloaliphatischen Alkoholen mit 2 bis 12 Kohlenstoffatomen und deren Derivaten herstellen. Als Beispiele für umsetzbare Alkohole werden die bekannten einwertigen, primären, aliphatischen Alkohole wie Ethanol, n-Propanol, n-Butanol, 2-Methylpropanol-(1), n-Pentanol, 2-Methylbutanol-(4), 2,2,-Dimethylpropanol-(1), 2,2,-Dimethylpropanol-(1), n-Hexanol, 2-Ethylhexanol-(1), Laurylalkohol usw., die sekundären Alkohole wie Isopropanol, 1-Methylpropanol-1 usw. und die tertiären Alkohole wie 2-Methylpropanol-(2), 2-Methylbutanol-(2) usw. und deren Derivate genannt.

Neben den einwertigen aliphatischen Alkoholen können auch cycloaliphatische Alkohole wie Cyclopropanol, Cyclobutanol, Cyclopentanol, Cyclohexanol usw. und deren Derivate, mehrwertige Alkohole wie Ethandiol, Propandiol, Butandiol usw. und deren Derivate sowie ungesättigte Alkohole wie Propargylalkohol, Butendiol, Butindiol usw. und deren Derivate erfindungsgemäß umgesetzt werden.

Als Ausgangsstoff kann ein Alkoholat dienen, das von einem Alkalimetall herrührt, womit die Metalle Li, Na, K, Cs und Rb gemeint sind. Auch ein Alkoholat eines Erdalkalimetalls kann als Quelle dienen, sofern eine alkoholische Lösung des Alkoholats in ausreichender Konzentration und mit nennenswerter elektrischer Leitfähigkeit vorliegt.

Das erfindungsgemäße Verfahren ermöglicht also die Herstellung einer Vielzahl von Alkoholaten und insbesondere von Sonderalkoholaten auf sehr einfache und zugleich wirtschaftliche Weise, weil es auf den hohen Trennaufwand zur z. B. destillativen Aufarbeitung des Produktgemisches verzichtet. Es ermöglicht die Herstellung von Sonderalkoholaten bedarfsgerecht auch in kleinen Mengen ohne großen apparativen Aufwand. Zugleich überwindet es die im Stand der Technik vorherrschende Meinung, daß eine Umalkoholisierung von Alkoholaten in flüssiger Phase nur durch Umkochen erfolgen kann.

Das erfindungsgemäße Verfahren wird durch die nachfolgenden Beispiele näher erläutert, ohne darauf beschränkt zu sein:

Beispiel 1:

Die elektrolytische Zelle (vgl. Abb. 1) bestand aus einer Stahlkathode und einer Anode aus platiniertem Titan. Die Elektroden wurden durch eine Kationenaustauschmembran K vom Typ C 66-10 F der Fa. Tokuyama Soda Corp. getrennt. Die Membranfläche betrug 100 cm$^2$. Die Anodenkammer wurde aus einem temperierten Vorratsbehälter (B1 in Abb. 1) gespeist, in dem 1 512 g einer 5,7 Gew.-%igen Lösung von Natriummethylat in Methanol (p. a. Ware) vorgelegt wurden. Die Lösung wurde aus der Kammer wieder in den Behälter zurückgepumpt. Die Anodenkammer bildete mit dem Behälter B1 den "Diluatkreislauf". Entsprechend wurde die Kathodenkammer einem "Konzentratkreislauf" angeschlossen. In dem Behälter B2 wurden 1 358 g reines Isopropanol (p. a. Ware) vorgelegt.

Der Versuch verlief bei 20 bis 30 °C und einer Spannung von 120 V. Er wurde nach 24,6 h abgebrochen. Es wurden 52,7 g Natriumisopropylat produziert. Die Stromausbeute, die sich ergibt als Quotient aus der tatsächlich produzierten Menge zur nach dem Faraday'schen Gesetz berechneten, theoretisch erzielbaren Menge von 117 g, betrug 45 %. Die Reinheit des nach Abdestillieren des Isopropanols als Rückstand erhaltenen Alkoholats betrug bereits 95 Gew.-%.

Beispiel 2:

Der Versuch verlief wie im Beispiel 1, aber nur über 5,33 h. Es wurden 1 528 g einer 5,5-Gew.-%igen Lösung von Natriummethylat in Methanol (p. a. Ware) in der Anodenkammer vorgelegt. Als Katholyt wurden 1 343 g 99 Gew.-%iger Propargylalkohol (3-Hydroxypropin) vorgelegt. Es wurden 18,4 g Natriumpropargylat produziert. Die Stromausbeute betrug 57 %. Aus Sicherheitsgründen wurde auf ein Abdestillieren bis zum trockenen Zustand verzichtet.

Beispiel 3:

Der Versuch verlief wie im Beispiel 1, aber nur über 6,33 h. Es wurden 1 515 g einer 5,21 Gew.-%igen Lösung von Natriummethylat in Methanol (p. a. Ware) in der Anodenkammer vorgelegt. Als Katholyt wurden 1 356 g reines 1-Butanol (p. a. Ware) vorgelegt. Es wurden 12 g Natrium-1-butylat produziert. Die Stromausbeute betrug 53 %. Die Reinheit des nach Abdestillieren des Alkohols als Rückstand erhaltenen Alkoholats betrug > 95 Gew.-%.

Beispiel 4:

Der Versuch verlief wie im Beispiel 1, aber über 26 h. Es wurden 1 518 g einer 6 Gew.-%igen Lösung von Natriummethylat in Methanol (p. a. Ware) in der Anodenkammer vorgelegt. Als Katholyt wurde eine Lösung von 8 g Natriumperchlorat in 1 350 g reinem tertiärem Butanol (p. a. Ware) vorgelegt. Das Perchlorat diente als Leitsalz. Es wurden 20 g Natrium-t-butylat produziert. Die Stromausbeute betrug 20 %.

Beispiel 5:

Der Versuch verlief wie im Beispiel 1, aber nur über 12,42 h. Es wurden 1 518 g einer 5,51 Gew.-%igen Lösung von Natriummethylat in Methanol (p. a. Ware) in der Anodenkammer vorgelegt. Als Katholyt wurden 1 322 g 99,6 Gew.-%iges 1,4-Butandiol vorgelegt. Es wurden 34,4 g Dinatriumbutandiolat produziert. Die Stromausbeute betrug 20 %. Die Reinheit des nach Abdestillieren des Alkohols als Rückstand erhaltenen Alkoholats betrug nahezu 100 Gew.-%. Im Rahmen der Fehlergrenze der NMR-Spektroskopie konnten keinerlei organische Verunreinigungen nachgewiesen werden.

Beispiel 6:

Der Versuch verlief wie im Beispiel 1, aber nur über 15,5 h. Es wurden 1 232 g einer 5,1 Gew.-%igen Lösung von Natriummethylat in Methanol (p. a. Ware) in der Anodenkammer vorgelegt. Als Katholyt wurden 1 110 g reiner Amylalkohol bzw. 1-Pentanol (p. a. Ware) vorgelegt. Es wurden 13,3 g Natriumamylat produziert. Die Stromausbeute betrug 47 %. Die Reinheit des nach Abdestillieren des Alkohols als Rückstand erhaltenen Alkoholats betrug 95 Gew.-%.

Beispiel 7:

Der Versuch verlief wie im Beispiel 1, aber über 33,4 h. Es wurden 1 533 g einer 6,9 Gew.-%igen Lösung von Natriumethylat in Ethanol (99,5 Gew.-%ig) in der Anodenkammer vorgelegt. Als Katholyt wurden 1 402 g einer Lösung von 46,8 g Natriummethylat in 1 355 g 1-Octanol (98 Gew.-%ig) vorgelegt. Das Methylat diente als Leitsalz. Die Elektrolyse erfolgte bei 316 K. Es wurden 5,6 g Natriumoctylat auf dem elektrolytischen Weg produziert (bei dieser Angabe wurde der Tatsache Rechnung getragen, daß bei der anschließenden Destillation des verbleibenden Octanols im Konzentratkreislauf auch eine Umalkoholisierung bzw. Umkochen des vorhandenen Methylats erfolgt, wodurch anteilig Octylat entsteht). Die Stromausbeute betrug 10 %. Die Reinheit des nach Abdestillieren des Alkohols als Rückstand erhaltenen Octylats betrug 83 %. Nach NMR-Spektroskopie bestand der Rest nur aus Methylat.

Beispiel 8:

Der Versuch verlief wie im Beispiel 1 und 4, jedoch über 18,6 h. Es wurden 1 513 g einer 6 Gew.-%igen Lösung von Natriummethylat in Methanol (p. a. Ware) in der Anodenkammer vorgelegt. Diesmal wurde das Methylat anstelle des Perchlorats als Leitsatz für den Katholyt eingesetzt. Als Katholyt wurden 1 365 g eines Gemisches aus 10 Gewichtsanteilen Methanol und 90 Gewichtsanteilen tertiärem Butanol (p. a. Ware) vorgelegt. Es wurden 3 g Natrium-t-butylat produziert. Die Stromausbeute betrug 8 %. Der gewonnene Feststoff enthielt 24 Gew.-% t-Butylat neben dem Methylat.

Beispiel 9:

Der Versuch verlief wie im Beispiel 1 zur Herstellung von Isopropylat. Aber es wurde die elektrodialytische Methode angewandt (Abb. 2). Dabei bildeten die alternierend angebrachten zwei Kationenaustauschmembranen K und die Bipolarmembran B zwei zusätzliche Kammern, durch die jeweils ein weiterer Diluat- bzw. Konzentrationskreislauf führte. Es wurden 1 336 g einer 5,9 Gew.-%igen Lösung von Natriummethylat in Methanol (p. a. Ware) im Anodenbehälter B1 vorgelegt. Als Katholyt (B2) bzw. Konzentrat (B3) wurden in Behälter B2 1 383 g und in Behälter B3 1 450 g Isopropanol (p. a. Ware) vorgelegt. Als Diluat (Behälter B4), in dem die Protonierung des Methylats stattfand, dienten 982 g einer 6,0 Gew.-%igen Lösung von Natriummethylat in Methanol (p. a. Ware). Die Versuchsdauer betrug 25,5 h. Es wurden insgesamt 7,88 g (im Konzentratkreislauf 3,61 g und im Katholyt 4,27 g) Natriumisopropylat produziert. Die Stromausbeute betrug 58 % im Konzentrat und 68 % im Katholyt. Die Reinheit des nach Abdestillieren des Alkohols als Rückstand erhaltenen Alkoholats betrug > 98 Gew.-%.

Analytik zu den Versuchen der Beispiele 1 bis 9:

Durch eine Elementaranalyse konnte der Transport von Natriumionen aus der Anodenkammer in die Kathodenkammer quantitativ erfaßt werden. Die Natriumbilanz bestätigte die Umsetzung von Natriummethylat an der Anode (Protonierung) und die Abwanderung der $Na^+$-Ionen. Ebenfalls wurde auch deren Einwanderung in die Kathodenkammer sowie die Bildung des höheren Alkoholats bestätigt. Durch potentiometrische Titration wurde die Entstehung des höheren Alkoholats qualitativ und quantitativ erfaßt. Zusätzlich wurde der Katholyt nach jedem Versuch destillativ von überschüssigem Alkohol befreit, der Rückstand mit Essigsäure protoniert und der aus dem festen Alkoholat wieder freigewordene Alkohol nachgewiesen. Außerdem wurde auch durch IR- bzw. NMR-Spektroskopie die Struktur des Alkoholats im Rückstand bestätigt.

**Patentansprüche**

1. Verfahren zur Herstellung von Alkoholaten, dadurch gekennzeichnet, daß unter dem Einfluß eines elektrischen Feldes ein Alkohol durch Einfuhr von Metallionen in das gewünschte Alkoholat umgesetzt und gleichzeitig ein anderes Alkoholat durch Zerlegung in dem elektrischen Feld als Quelle für die Metallionen dient, wobei die Umsetzung und die Zerlegung in räumlich durch Ionenaustauschmembranen getrennten Kammern in flüssiger Phase erfolgt.

2. Verfahren nach Anspruch 1, dadurch gekennzeichnet, daß als Ausgangsstoff ein Alkalialkoholat oder Erdalkalialkoholat eingesetzt wird.

3. Verfahren nach einem der Ansprüche 1 bis 2, dadurch gekennzeichnet, daß als Ausgangsstoffe ein Alkohol und das Alkoholat eines anderen Alkohols mit kleinerem Alkylrest als der des ebenfalls vorgelegten Alkohols eingesetzt werden.

4. Verfahren nach einem der Ansprüche 1 bis 3, dadurch gekennzeichnet, daß die Umsetzung nach Einsetzen einer Kationenaustauschmembran zwischen die Elektroden auf elektrolytischem Weg erfolgt.

5. Verfahren nach einem der Ansprüche 1 bis 3, dadurch gekennzeichnet, daß die Umsetzung nach dem Einsetzen von Anionen- und Kationenaustauchmembranen oder Kationenaustausch- und Bipolarmembranen zwischen die Elektroden auf dem elektrodialytischen Weg erfolgt.

6. Verfahren nach einem der vorherigen Ansprüche, dadurch gekennzeichnet, daß die Umsetzung bei 0 °C bis 100 °C erfolgt.

7. Verfahren nach Anspruch 6, dadurch gekennzeichnet, daß die Umsetzung bei 20 °C bis 50 °C erfolgt.

8. Verwendung des Verfahrens nach den Ansprüchen 1 bis 7 zur Herstellung von Alkoholaten aus primären, sekundären und tertiären aliphatischen Alkoholen, cyclischen Alkoholen, ungesättigten Alkoholen und mehrwertigen (Polyhydroxy-) Alkoholen bzw. deren Derivaten.

## Claims

1. A process for preparing alcoholates, characterized in that an alcohol is converted into the desired alcoholate by introduction of metal ions in the presence of an electric field and, at the same time, another alcoholate is decomposed in the electric field to serve as source of the metal ions, the reaction and the decomposition occurring in the liquid phase in chambers which are physically separated by ion-exchange membranes.

2. A process according to claim 1, characterized in that an alkali metal alcoholate or alkaline earth metal alcoholate is used as starting material.

3. A process according to either of claims 1 and 2, characterized in that an alcohol and the alcoholate of another alcohol having a smaller alkyl radical than that of the alcohol which is likewise provided are used as starting material.

4. A process according to any one of claims 1 to 3, characterized in that the reaction is carried out electrolytically after placing a cation-exchange membrane between the electrodes.

5. A process according to any one of claims 1 to 3, characterized in that the reaction is carried out electrodialytically after placing anion- and cation-exchange membranes or cation-exchange and bipolar membranes between the electrodes.

6. A process according to any one of the preceding claims, characterized in that the reaction is carried out at from 0°C to 100°C.

7. A process according to claim 6, characterized in that the reaction is carried out at from 20°C to 50°C.

8. The use of the process according to any of claims 1 to 7 for preparing alcoholates from primary, secondary and tertiary aliphatic alcohols, cyclic alcohols, unsaturated alcohols and polyhydric alcohols (polyhydroxyalcohols) or their derivatives.

## Revendications

1. Procédé de fabrication d'alcoolates, caractérisé en ce que sous l'influence d'un champ électrique on transforme un alcool par apport d'ions métalliques en l'alcoolate désiré et simultanément en ce qu'on utilise un autre alcoolate, par décomposition dans le champ électrique, comme source d'ions métalliques, la transformation et la décomposition s'effectuant en phase liquide dans des chambres spatialement séparées par des membranes échangeuses d'ions.

2. Procédé selon la revendication 1, caractérisé en ce qu' on utilise comme produit de départ un alcoolate de métal alcalin ou un alcoolate de métal alcalino-terreux.

3. Procédé selon l'une des revendications 1 à 2, caractérisé en ce qu' on utilise comme produit de départ un alcool et l'alcoolate d'un autre alcool ayant un plus petit radical alkyle que celui de l'alcool également employé.

4. Procédé selon l'une des revendications 1 à 3, caractérisé en ce qu' on procède à la transformation par un moyen électrolytique après utilisation d'une membrane échangeuse de cations entre les électrodes.

5. Procédé selon l'une des revendications 1 à 3, caractérisé en ce qu' on procède à la transformation par un moyen d'électrodialyse après utilisation de membranes échangeuses d'anions et de cations ou de membranes échangeuses de cations et de membranes bipolaires entre les électrodes.

6. Procédé selon l'une des revendications précédentes, caractérisé en ce qu' on procède à la transformation entre 0°C et 100°C.

7. Procédé selon la revendication 6, caractérisé en ce qu' on procède à la transformation entre 20°C et 50°C.

8. Utilisation du procédé selon les revendications 1 à 7 pour la production d'alcoolates à partir d'alcools aliphatiques primaires, secondaires et tertiaires, d'alcools cycliques, d'alcools insaturés et de (polyhydroxy)-alcools polyvalents ou selon les cas de leurs dérivés.

Abb.1

Abb.2